# EUROPEAN PATENT APPLICATION

(11) **EP 0 794 425 A1**
(43) Date of publication of application: **10.09.1997**
(21) Application number: 97101028.5
(22) Date of filing: 23.01.1997
(51) Int. Cl.: G01N 21/55

(54) **Gas sensor**

(30) Priority: 08.03.1996 SE 9600914
(71) Applicant: Siemens-Elema AB, 171 95 Solna 1 (SE)
(72) Inventor: Castor, Rolf, S-129 42 Hägersten (SE); Palmskog, Göran, S-175 43 Järfälla (SE); Slettenmark, Bruno, S-175 60 Järfälla (SE)

(57) **Abstract**

A gas sensor is described for identifying and/or determining the concentration of a specific gas in a gas mixture. The gas sensor comprises a source of radiation (28), a spiral-shaped optical guide (30), with an optically active coating, a first radiation detector (32), a second radiation detector (38) and a control unit (34). The optically active layer's interaction with the specific gas changes one of the layer's optical properties, such as the refractive index. As a result, a smaller or larger amount of radiation generated by the source of radiation (28) and sent to the optical guide (30) is dispersed. The variation in the intensity of the transmitted light is determined by measuring its intensity in the first radiation detector (32) and relating it to a reference intensity, measured by the second radiation detector (36). The specific gas is identified and/or the concentration determined on the basis of the measured variation in intensity.

## Description

The present invention relates to a gas sensor according to the preamble to claim 1.

The term "optically active layer/material" refers throughout this application to the circumstance that one or more of the layer's/material's optical properties change/s or is/are affected when the layer/material comes in contact with a specific gas or group of gases. Refractive index, absorption and scattering are some the optical properties referred to. When the refractive index is described, analogous comments generally apply to other optical properties.

One known gas sensor is described in an article entitled "A gas sensor based on integrated optical Mach-Zehnder interferometer", Fabricius et al., Sensors and Actuators B, 7(1992): 672-676. The known gas sensor comprises a waveguide which subdivides in one section into a measurement branch and a reference branch. The measurement branch is coated with an optically active material and exposed to a gas mixture containing the specific gas to be sensed. Light is generated and sent into the waveguide. In the subdivided section, some of the light passes through the measurement branch, and some of the light passes through the reference branch. After this section, the branches reunite, and all the light is mixed. A phase shift occurs between light in the respective branches, and the phase shift is correlated to the effective refractive index in the measurement branch. The effective refractive index can then be calculated from the interference pattern by application of Maxwell's equations. Since the effective refractive index is affected by interaction with the specific gas, the concentration of the latter can be calculated from the determined effective refractive index.

As a result of its complexity, the known gas sensor requires great computational (computer) resources. Since determinations are performed in multiple stages, the risk of different sources of error having an effect on results increases. So the known gas sensor is not very suitable for practical applications in which gas analysis must be performed with great accuracy and stability, regardless of external conditions and without access to great computer power, e.g. as in the measurement of anaesthetic gas in anaesthetic apparatus.

Another known gas sensor is described in GB - A - 2 198 844. The gas sensor includes an optical device having a coating of material the electrical permittivity, and hence refractive index, of which is capable of undergoing a change when material is in the presence of the gas to be detected. In operation light is passed through the optical device, a gas to be detected is admitted to the presence of the coating and the change in light passing to a detector is detected.

In tables, a number of coating materials and gases giving permittivity response are indicated. Most of the gases give response at relatively high temperatures, thereby reducing usability of the gas sensor.

Further, the gas sensor cannot be used for quantitative analysis, i. e. the concentration of the gas cannot be determined. For several of the listed materials, several gases can give permittivity response and in such cases the sensor cannot even be used for qualitative analysis, i. e. the identity of gas cannot be explicitly determined.

One object of the invention is to achieve a gas sensor which solves the problems associated with the known gas sensors.

One such gas sensor is achieved in accordance with the invention in that the gas sensor according to the preamble is devised in the manner set forth in the characterizing part of claim 1.

Advantageous improvements of the gas sensor according to the invention are disclosed in the dependent claims to claim 1.

The invention is based on the realisation that varying amounts of light will be transmitted through the optical guide, depending on the change in some optical property, such as the surface layer's refractive index, absorption, dispersion etc. For instance, consider refractive index. The condition for total reflection in the optical guide changes as the refractive index of the optically active layer changes. The change in the intensity of transmitted light (or dispersed light) is therefore a direct measure of the interaction between the specific gas and the optically active layer causing the changes in the refractive index.

These changes can be caused by diffusion of the specific gas into the optically active layer, thereby altering its optical properties. The changes can also be caused by a swelling of the optically active layer when it comes in contact with the specific gas (also resulting in a change in optical properties). A combination of both effects is also possible.

Irrespective of the underlying effect, a correlation can be experimentally established between concentration and intensity change and used for demonstrating the presence of a specific gas or for determining the concentration of same.

The intensity changes can be calculated from the intensity of light leaking out of the optical guide (dispersed light) or from the intensity of the transmitted light. A reference signal for the connected light radiation can be obtained from the radiation source itself for more reliable determination of the absolute change in intensity.

The optical guide can consist of an optical fibre, an optical fibre core, a D-fibre, a light waveguide or the equivalent. The source of radiation can advantageously consist of a light-emitting diode, but virtually all sources of light (including infra-red and ultraviolet radiation) can be used, e.g. laser diodes. The radiation detectors can consist of photo diodes or equivalent radiation-sensitive components. The optically active layer can be made of a silicone elastomer, polysiloxane or some other material with suitable optical properties which advantageously change the material's refractive index or other optical properties when the material is in contact with a specific gas.

Embodiments of the gas sensor according to the invention will be described below, referring to the figures in which
FIG. 1 shows the gas sensor in one application;
FIG. 2 shows a first embodiment of the gas sensor;
FIG. 3 shows a second embodiment of the gas sensor;
FIG. 4 shows a third embodiment of the gas sensor;
FIG. 5 shows a fourth embodiment of the gas sensor; and
FIG. 6 shows a fifth embodiment of the gas sensor.

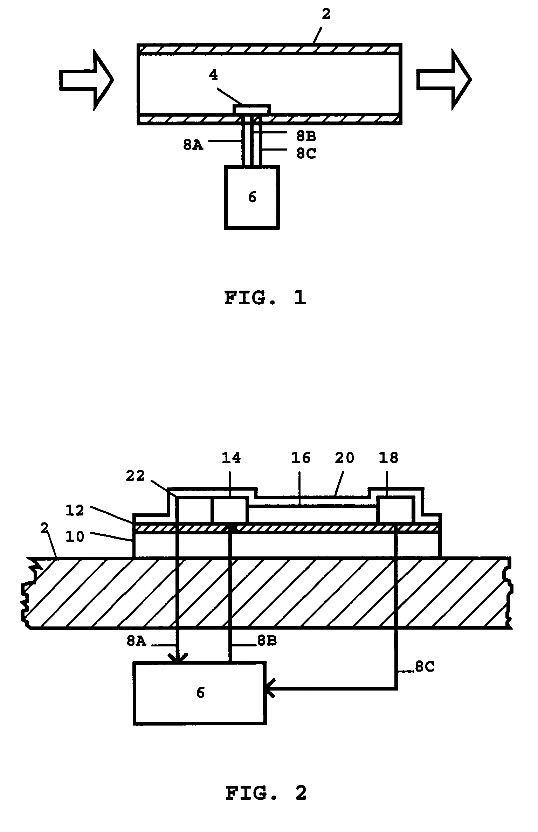

FIG. 1 shows how the gas sensor according to the invention can be used for detecting and/or determining the concentration of a specific gas in a gas mixture. A gas mixture flowing in a tubular chamber 2 passes a sensor unit 4 in the gas detector. The gas detector also comprises a control unit 6 which is connected to the sensor unit 4 via three signal line 8A, 8B, 8C. In this instance, electrical signals are transferred between the control unit 6 and sensor unit 4. However, electromagnetic signals (e. g. telemetry), optical signals (e. g. pulsed infra-red radiation) or acoustic signals (e. g. ultrasound) can also be used.

The tubular chamber 2 can form a part of a gas line in an anaesthetic apparatus or the like. The gas detector can then detect the presence and concentration of a specific anaesthetic gas in the anaesthetic apparatus. This particular application is used in the embodiments described below, in order to simplify the description. However, it should be noted that the gas sensor according to the invention is by no means limited to the detection of anaesthetic gas in an anaesthetic apparatus.

A first embodiment of the gas detector is shown in FIG. 2. Undercladding 12 is applied to a substrate 10, appropriately a silicon substrate. A light source 14, an optical guide 16 and a first light detector 18 are arranged in series on the undercladding 12 and coated with overcladding 20. The overcladding 20 consists of an optically active material whose refractive index changes as the concentration of anaesthetic gas changes. The entire silicon substrate 10 can be less than 10*10 mm, the optical guide 16 a few millimetres long and the overcladding 20 no more than a millimetre or so, preferably only a fraction of a millimetre, thick. A thinner overcladding 20 reduces the time needed for the anaesthetic gas to diffuse in and out of the overcladding 20.

Light from the light source 14, suitably a light-emitting diode, is conducted into the optical guide 16. In this embodiment, changes in the refractive index is the target parameter. Also in this embodiment, the overcladding 20 is made of a material whose refractive index increases when the concentration of the anaesthetic gas increases. Therefore, a somewhat higher value is chosen for the refractive index of the optical guide 16 than the refractive index of an unaffected overcladding 20 (i. e. in the absence of anaesthetic gas).

When anaesthetic gas comes in contact with the overcladding 20, the latter's refractive index accordingly increases. In consequence of this, the difference between the over-cladding's 20 refractive index and the optical guide's 16 refractive index decreases, ultimately dropping to zero or even to a negative value. As a result of physical conditions prevailing in an optical guide 16 (especially the condition for total reflection), an increasing amount of the light is dispersed through the overcladding 20 as the difference in refractive index successively declines. When the difference is zero, there is no reflection whatever in the surface layer between the optical guide 16 and the overcladding 20. So the intensity of transmitted light is at a minimum.

If a material whose refractive index declines on contact with the anaesthetic gas is selected as overcladding 20, the course of events is different. Instead of decreasing, the intensity of transmitted light increases as an increasing number of light modes in the optical guide 16 meet the condition for total reflection and reach the first light detector 18. The material with the decreasing refractive index can naturally be selected so it has a higher refractive index than the optical guide 16 when no anaesthetic gas is present. A zero crossing for the difference in refractive indices can then occur in the same way as described above. With a decreasing refractive index, however, there is a risk of a decline in the magnitude of the signal change, especially when the refractive index of the overcladding 20 is initially larger than the refractive index of the optical guide 16 and, therefore, much harder to determine.

If only the identification of an anaesthetic gas is necessary, the light guide 16 and overcladding 20 can be selected to have only a minute difference in the refractive indices, and the switch from a positive to a negative difference, causing a difference in the measurement signal, is used for the identification. If the optically active material is so specific that only one specific gas is capable of changing the refractive index, the difference in refractive indices is of less importance.

However, finding materials only specific to a given gas being studied is probably impossible. As a rule, a material is affected to varying degrees by other gases (at least by other gases with a similar chemical composition). Similarly, one specific gas can cause different changes in the optical properties of different materials. For absolutely reliable identification and/or determination of concentration, a plurality of sensors can therefore be arrayed in parallel (cf. FIG. 6, described below) and provided with different optically active materials as overcladdings. Despite poorer specificity, pattern recognition or artificial neural networks (ANN) can then be used in analysing the signals from the different sensors, each of which displaying a different effect on the optical properties.

A somewhat bigger difference in refractive indices (when materials with increasing refractive indices are used) is appropriately used for determining the concentration of the specific gas, i.e. the refractive index of the overcladding 20 should be smaller than the refractive index of the optical guide 16. For example, the difference is selected so the refractive indices becomes equal when the concentration exceeds appropriately selected peak values for the anaesthetic gas (and can therefore be used for generating an alarm). Selecting a material, in which the change in signal from the detector is as big as possible for the relevant concentration range, is most appropriate. This also applies when materials with decreasing refractive indices are selected (changes in the refractive index difference should be avoided for these materials.)

In the first light detector 18, the intensity of the light which is not passed through the overcladding 16 is measured, and the measurement signal is sent to the control unit 6 via the third line 8C. The concentration of anaesthetic gas can then be determined from the intensity variation caused by changes in the refractive index.

In order to ensure that the variation in intensity really is caused by the anaesthetic gas and not by the light source 14 or some other factor, the gas detector also contains a second light detector 22, arranged on the undercladding 12 and directly connected to the light source 14. The second light detector 22 measures the intensity of light emitted by the light source 14, thereby supplying a reference signal which is sent to the control unit 6 via the first line 8A.

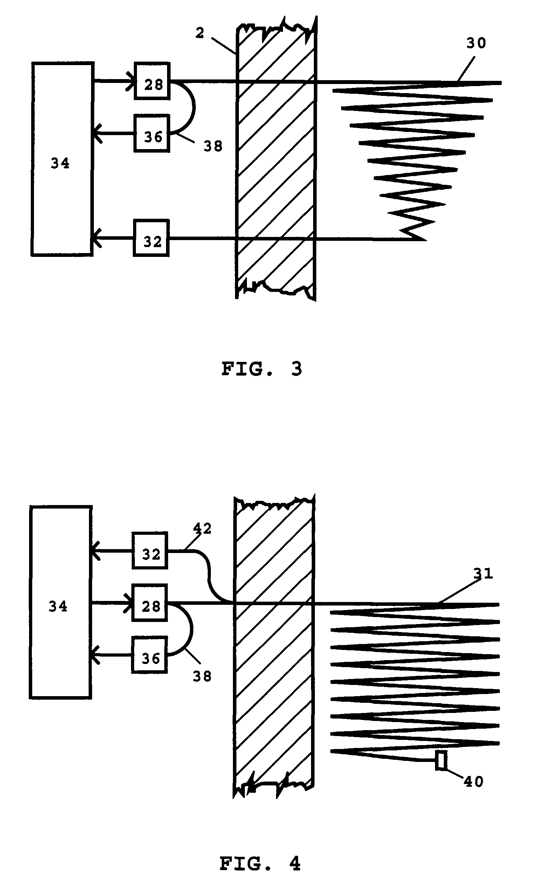

A second embodiment of the gas sensor is shown in FIG. 3. A light source 28 emits light. A light-emitting diode emitting incoherent light is appropriately used to prevent interference and modal jumps when the temperature varies. Light is conducted into a spiral-shaped optical guide 30. The optical guide 30 is preferably spiral-shaped with a decreasing diameter. The coils can lie in the same plane or be devised as a conical helix. The spiral shape permits better modal mixing of the light beam, better dynamics and greater sensitivity, since leakage as a function of the distance traversed can be made relatively constant for all modes in the light transmitted in the optical guide 30. This is because conditions for total reflection change continuously with changes in the radius. For an optical guide devised as a cylindrical helix, transmitted light fall-off is more exponential, resulting in a poorer utilisation of the sensor's optical length (when the same optical length is used). In order to achieve the best modal mixing, a mode mixer (not shown in the FIG.) can advantageously be placed between the light source and spiral.

A major advantage of the spiral shape for the optical guide (irrespective of whether the radius is constant or varying) is that the sensor can be devised for optimum sensitivity and dynamics by appropriate selection of a radius/radius variation. This means that even if it is hard to find a substance with suitable optical properties in relation to the optical guide (e.g. that all known substances that change their optical properties for a specific gas to be analysed simultaneously has unsuitable refractive indices in relation to the optical guide's refractive index), the design of the spiral's radius can compensate for these shortcomings. Note, for instance, the case of a substance with a refractive index less than the optical guide's refractive index. Even if the available substance has a less than desirable (optimum) refractive index, the spiral's radius of curvature can be made smaller to compensate for this. Even though the number of available materials/substances having desirable properties is limited, compensation and optimisation of the sensor can still always be made by adapting a spiral-shaped optical guide in suitable way. This greatly increases the sensor's field of use in relation to sensor designs without spiral-shaped optical guides.

The spiral is appropriately as small as possible, with a maximum diameter less than 50 mm, preferably less than 10 mm. The minimum diameter can be as small as a half millimetre or even less. With appropriate heat treatment in fabrication, only the optical guide's diameter limits, in principle, the magnitude of the radius of curvature. The optical guide 30, which can consist of an optical fibre, possibly only a cylindrical fibre core, or a D fibre, is coated with a thin layer of an optically active material/substance whose optical properties vary with the concentration of the anaesthetic gas. If the refractive index is the optical property to be used, an optically active material is selected with a refractive index appropriate to the fibre's refractive index.

The permanent bending of the optical guide 30 means that some modes gradually leak out into the surroundings more than others. When the refractive index changes when the concentration of the specific gas changes, the number of modes and even the amount of leaking light also change. This affects the intensity of transmitted light, and a control unit 34 can determine the concentration of the anaesthetic gas by measuring changes in intensity with a first light detector 32. As in the previous embodiment, a reference signal is determined by having a second light detector 36 measure the intensity of generated light via a line 38 from the optical guide 30.

A version of the second embodiment is shown as a third embodiment in FIG. 4. The same designations have been used for components that can be identical. The third embodiment thus comprises, like the second embodiment, a light source 28 which generates light and sends it to a spiral-shaped optical guide 31. In this instance, however, the spiral-shape of the optical guide 31 is devised as a cylindrical helix. A reflector 40 is arranged at the end of the optical guide 31, and all the light is reflected back through the optical guide 31. In this manner, the light traverses the spiral twice, and increased sensitivity is obtained, since the optical length is doubled. Alternately, this design can be used to devise a more compact gas sensor, since an optical guide only half as long would yield the same optical length when light traverses the optical guide twice instead of once.

Through a line 42, final intensity is measured in a first light detector 32, and concentration can be determined in the control unit 34. Here, the line 42 consists of some appropriate device for beam splitting. Such devices are known in the optical art and require no further description here.

Another way of increasing the measurement distance is shown in FIG. 6 described below.

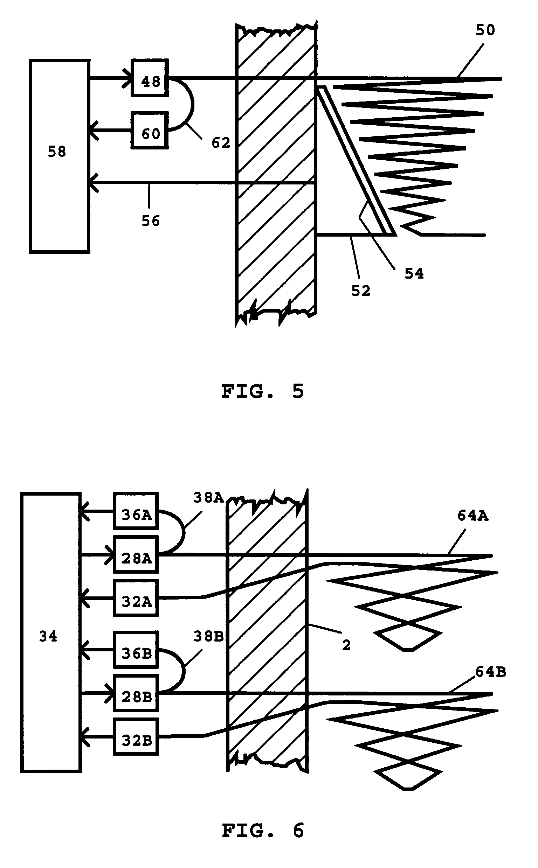

A fourth embodiment is shown in FIG. 5. Also in this case, light is emitted from a light source 48 and connected to an optical guide 50 which is spiral-shaped and coated with an optically active material. In this instance, the intensity of generated or dispersed light is sensed in a first light detector 52, and the measurement signal is sent by a line 56 to a control unit 58. So the concentration of anaesthetic gas is determined from the light leaked out of (dispersed from) the spiral and not from the transmitted light, as in the previous embodiments. The light detector 52 can be devised as a straight, truncated cone enclosing the spiral. In this way, as much as possible of the spiral's surface is sensed. A further light detector (not shown) could be placed inside the spiral-shaped optical guide 50 and increase the surface covered.

As in the previous embodiments, a reference signal is obtained by measuring, via a line 62 from the light source 48, the generated light's intensity in a second light detector 60.

A fifth embodiment of the gas sensor is shown in FIG. 6. Elements that can be identical to elements used in the second and third embodiments have corresponding numerals. Here a first light source 38A generates light and emits it into a first optical guide 64A. The first optical guide 64A is arranged so half of it is coiled in a spiral with a decreasing diameter and half is coiled in a spiral with an increasing diameter. The second half is also coiled in a spiral essentially parallel to the first half, so a very compact gas sensor in relation to the measurement distance (optical length) is obtained. This embodiment allows the optical guide's 64A two ends, as well as the light source 38A and light detectors 32A, 36A, to be arranged close to each other in the gas sensor. The entire gas sensor can therefore be made very compact.

In the fifth embodiment the measurement elements are doubled. Thus, a second light source 38B is arranged to emit light into a second spiral-shaped optical guide 64B and the transmitted light is measured by a third light detector 32B. A reference signal for the generated light is measured by a fourth light detector 36B, the light being transmitted through a second line 38B from the second light source 28B.

By coating the second spiral-shaped optical guide 64B with a different optically active substance (than the one used on the first optical guide 64A) the gas sensor becomes more versatile. The second coating can be adapted to another specific gas and two gases in a gas mixture can then be analysed simultaneously. Alternately, the second coating could be adapted to the same specific gas. In such case the capacity to identify a specific gas in a mixture containing several similar gases or where other gases also causes changes in the optical properties increases. The control unit 34 can incorporate pattern recognition devices or ANN's for identifying and quantifying the specific gas.

Instead of completely doubling all elements, the first light source 28A can be used for emitting light into both optical guides 64A, 64B. The second light source 28B and the fourth light detector 36B could then be removed. The first light detector 32A can in a similar manner be used for detecting light from both optical guides 64A, 64B if an optical switch is included between the first light detector 32A and the optical guides 64A, 64B, sequentially connecting the optical guides 64A, 64B to the first light detector 32A.

By using optical multiplexers, several optical guides can be used with only one light source and two light detectors (one for the reference signal). An extremely compact and versatile gas sensor is then obtained.

Compact gas sensors can also be obtained by having the optical guide in the shape of a flat helix.

Combinations can be made for all the embodiments, where applicable. For example, the spirals in FIGS. 3, 5 and 6 can be replaced with cylindrical helical spirals (corresponding to the one shown in FIG. 4). In addition, the reliability of measurements increases if a constant environment (pressure, temperature and humidity in particular) can be maintained in and around the gas sensor. Alternately, these and other environmental factors can be measured and used for compensating the gas sensor's measurements. 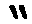 Refractive index*"* is the main optical property used in the embodiments, but the corresponding also applies to e.g. absorption and dispersion. For example, light-emitting diodes are suitable for absorption changes, as they are available for a very wide range of wavelengths.

## Claims

1. A gas sensor for identifying and/or determining the concentration of at least one specific gas in a gas mixture, comprising a source of radiation (14; 28; 48) for generating light, an optical guide (16; 30; 31; 50; 64A, 64B) for transmitting light, an optically active material (20) applied over a predetermined area of said optical guide (16; 30; 31; 50; 64A, 64B), said optically active coating (20) being at least in part exposable to the gas mixture, the optically active coating (20) having an optical property which varies depending on the concentration of the specific gas and interacts with the light transmitted in the optical guide (16; 30; 31; 50; 64A, 64B) and a radiation detector (18; 32; 52, 54) for detecting light, **characterized by** a calculation unit (6; 34: 58) devised to determine, on the basis of the light intensity detected by the radiation detector (18; 32; 52, 54) and the intensity of the light generated by the source of radiation (14; 28; 48), the effect of the interaction on the light's intensity, and the calculation unit (6; 34; 58) identifies and/or determines the concentration of the specific gas from the determined effect.

2. A gas sensor according to claim 1, **characterized in** that the radiation detector (18; 32) is arranged to detect the intensity of the light transmitted through the optical guide (16; 30; 31; 64A, 64B).

3. A gas sensor according to claim 1, **characterized in** that the radiation detector (52, 54) is arranged to detect the intensity of the light dispersed from the optical guide (50).

4. A gas sensor according to any of the above claims, **characterized by** a second radiation detector (22; 36; 60) for determining the intensity of the light coupled to the optical guide (16; 30; 31; 50; 64A, 64B) from the source of radiation (14; 28; 48).

5. A gas sensor according to any of the above claims, **characterized in** that the optical guide (30; 31; 50; 64A, 64B) is bent in the shape of a spiral.

6. A gas sensor according to claim 5, **characterized in** that the optical guide (30) is bent with a successively decreasing radius of curvature, preferably in the form of a conical helix.

7. A gas sensor according to claim 6, **characterized in** that a first predefined length of the optical guide (64A, 64B) is bent with a diameter decreasing towards the middle of the optical guide (64A, 64B), and a second predefined length of the optical guide (64A, 64B) is bent with an diameter increasing from the middle of the optical guide (64A, 64B).

8. A gas sensor according to claim 5, **characterized in** that the optical guide (31) is bent with a constant radius of curvature, preferably in the form of a cylindrical helix.

9. A gas sensor according to any of claims 5-8, **characterized in** that the optical guide (30; 31) has two ends, the first end being connected to the source of radiation (28) and the second end being connected to a radiation-reflecting device (40), and a line (42) for receiving reflected radiation is connected to the optical guide (30) at a predefined distance from the first end.

10. A gas sensor according to any of claims 5-9, **characterized in** that the optical guide (30; 50) consists of an optical fibre, preferably a cylindrical fibre core.

11. A gas sensor according to any of claims 1-4, **characterized in** that the source of radiation (14), the radiation detector (18) and the optical guide (16) are integrated components on a silicon substrate.

12. A gas sensor according to claim 9, **characterized in** that the source of radiation (14) consists of a light-emitting diode, the radiation detector (18) consists of a light-sensing diode, the optical guide (16) consists of a light waveguide, a second light-sensing diode (22) is integrated on the silicon substrate (10) and the optically active material (20) is applied onto the components in the form of overcladding.

13. A gas sensor according to any of the above claims, **characterized by** at least one further optical guide (64B), each optical guide (64A, 64B) preferably being coated with different optically active materials.

14. A gas sensor according to any of the above claims, **characterized in** that the optically active layer (20) has a refractive index which is smaller than the optical guide's refractive index when it is not in contact with the specific gas.

15. A gas sensor according to any of the above claims, **characterized in** that the optically active layer (20) consists of a silicone elastomer, polysiloxane or a material with appropriate optical properties which change on contact with the gas or gases to be sensed.
